Europäisches Patentamt

European Patent Office

Office européen des brevets

(19)

(11) **EP 1 473 612 A1**

(12) **EUROPEAN PATENT APPLICATION**
published in accordance with Art. 158(3) EPC

(43) Date of publication:
**03.11.2004 Bulletin 2004/45**

(51) Int Cl.⁷: **G05D 7/06**, G01F 1/28, G01F 1/40

(21) Application number: **03703235.6**

(22) Date of filing: **06.02.2003**

(86) International application number:
**PCT/JP2003/001272**

(87) International publication number:
**WO 2003/067352 (14.08.2003 Gazette 2003/33)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **07.02.2002 JP 2002031190**

(71) Applicant: **TOYO VALVE CO.,LTD.**
**Chino-shi, Nagano 391-0012 (JP)**

(72) Inventors:
• **TANAKA, Toshiharu,**
**R & D sector, Toyo Valve Co Ltd**
**Chino-shi, Nagano 391-0012 (JP)**

• **ICHINOSE, Tadaharu, P T Division**
**Toyo Valve Co Ltd**
**Chino-shi, Nagano 391-0012 (JP)**
• **YATA, Katsuhisa,**
**R & D sector, Toyo Valve Co Ltd**
**Chino-shi, Nagano 391-0012 (JP)**

(74) Representative: **Skone James, Robert Edmund**
**GILL JENNINGS & EVERY,**
**Broadgate House,**
**7 Eldon Street**
**London EC2M 7LH (GB)**

(54) **FLOW REGULATING VALVE, FLOW RATE MEASURING DEVICE, FLOW CONTROL DEVICE, AND FLOW RATE MEASURING METHOD**

(57)     A flow regulating valve (11) , which has a valve disk (11b) operably disposed in a flow channel and is capable of regulating the flow of fluid according to the valve opening degree of the valve disk (11b), is characterized by comprising a stress detecting means (13) for detecting the flow-channel-direction force component of a load applied to the valve disk by the fluid, and a valve opening degree detecting means (12) for detecting the degree of opening of the valve disk. The flow rate calculating means (14) finds the flow rate (Qm) from the stress (fm) obtained from the stress detecting means and from the valve opening degree (θm) obtained from the valve opening degree detecting means. A control means (15) controls a valve disk driving means (18) on the basis of the flow rate to drive the valve disk for opening and closing. This makes it possible to find the flow rate with higher sensitivity and accuracy than in the prior art, the construction being compact and simple, providing stabilized data.

FIG. 1

## Description

Technical Field

The present invention relates to a flow regulating valve, a flow rate measuring device, a flow control device, and a flow rate measuring method, in particular to a flow rate measuring technique or a flow rate controlling technique, which is preferred where a butterfly valve is used.

Background Art

Generally, a butterfly valve has been known in which a plate-shaped valve element rotating around an axis roughly orthogonal to the flow-channel direction is rotatably composed with respect to the housing thereof. The butterfly valve is constructed so that it can control its flow rate by the valve opening degree of the valve element.

A method for measuring a flow rate and a method for controlling the flow rate, for which such a butterfly valve is utilized, are described in Japanese Unexamined Patent Publication No. Hei-7-174596. In the publication, it is described that the dynamic torque of the valve element of the butterfly valve is detected, and the flow rate of a fluid passing through the butterfly valve is measured on the basis of the dynamic torque and the valve opening degree. In addition, a control system is also described, which controls the valve opening degree of a butterfly valve on the basis of the flow rate measured as described above.

On the other hand, an orifice flow rate meter has been known as a technique for measuring the flow rate of a fluid, which detects the fluid pressure at the upstream side of an orifice and the pressure at the downstream side thereof and calculates the flow rate on the basis of a difference between the upstream fluid pressure and downstream fluid pressure.

However, in the flow rate measuring method or flow rate controlling method of a butterfly valve mentioned in the above-described publication, since the dynamic torque which the valve element receives from a fluid is detected, only a part of the stress received from the fluid contributes to the torque, and in particular, the dynamic torque is radically decreased where the valve opening degree is in a nearly fully closed or fully open state. Further, since the dynamic torque to be detected is a torque oriented in the same direction as that of opening and closing movement of the valve element, it is difficult to detect only the dynamic torque received from the fluid. Therefore, sensitivity and accuracy are low, wherein there is a problem in that, although the methods can be used for fluids having almost the same specific gravity as that of water, measurement becomes difficult as the specific gravity is smaller. Also, there is another problem in that, since it is necessary to detect the opening and closing torque and the dynamic torque of a butterfly valve with the torque separated from each other, the detecting means is complicated.

To the contrary, the orifice flow rate meter does not have the above-described problems since the flow rate is measured based on a differential pressure. However, there is still another problem in that there is a limit to the range of the flow rate due to the diameter of an orifice. Further, at a pressure measuring point at the downstream side, turbulence of a fluid, which is produced after the fluid passed through an orifice, makes data unstable, and in particular, where the differential pressure is high, unstability of detection data is further increased. In the worst case, measurement itself may become impossible. In addition, since it is necessary for an orifice flow rate meter to be provided with two pressure-detecting portions at the upstream side and downstream side, there is a problem in that the structure for measuring a flow rate cannot be constructed to be compact.

Disclosure of the Invention

It is therefore an object of the invention to provide a valve structure, which is capable of detecting a flow rate therein and is able to carry out flow rate measurement of higher sensitivity and accuracy than in the prior arts, a flow rate measuring device using the valve structure, or a flow control device using the valve structure.

A flow regulating valve according to the present invention is a flow regulating valve, which has a valve element operably disposed in a flow channel and is capable of regulating the flow of a fluid according to the valve opening degree of the valve element, is characterized by comprising a stress detecting means for detecting the flow-channel-direction force component of a load applied to the valve element by the fluid, and a valve opening degree detecting means for detecting the degree of opening of the valve element.

According to the invention, the flow regulating valve is provided with a stress detecting means for detecting a flow-channel-direction force component of a load applied to the valve element by a fluid, and the corresponding force component is subjected to almost the entirety of a part, resulting from a differential pressure of the fluid before and after the valve element, of the load applied to the valve element by the fluid. Therefore, the detected value itself becomes larger than in the prior art methods, and at the same time, the detected value hardly depends on the valve opening degree, wherein it is possible to obtain a value corresponding to a differential pressure between the upstream side and the downstream side of the flow regulating valve with sufficient sensitivity and accuracy. Accordingly, for example, the flow regulating valve is applicable to any fluid such as a liquid or a gas, which has a smaller specific gravity than that of water. Also, it does not become necessary to detect the dynamic torque in a direction that is coincident with the operating direction of the valve element, wherein it is sufficient to detect a stress component oriented in the direction of the flow channel, and the detection state is hardly influenced by the opening and closing operations of the valve element. Therefore, it is possible to further increase the detection accuracy, and at the same time, it becomes possible to simplify the structure of a detector and of a calculation process. In addition, since it is not necessary to obtain a differential pressure by detecting differential pressure at two points as in the flow rate measuring technique utilizing an orifice, the construction can be made compact, and it is possible to lighten influences resulting from fluctuations inpressure due to turbulence, etc. , which is produced after a fluid passes through the orifice, wherein a stabilized detection figure can be obtained.

Further, a stress detecting means referred to in the present invention widely includes those that are capable of obtaining an output corresponding to the above-described force component. Therefore, the means may be not only a means which outputs the flow-channel-direction stress f applied to the valve element by a fluid but also a means which detects a flow-channel-direction displacement amount compatible with the corresponding stress f and a flow-channel-direction strain amount compatible thereto. However, it does not include a means that detects a torque in the rotation direction of the valve element.

Herein, a flow-channel-direction force-component of a load applied to the valve element by a fluid is a stress and/or pressure directly resulting from a differential pressure of the fluid before and after the valve element, and is featured in that it hardly depends on the viscosity and velocity of the fluid or the valve opening degree. Also, it is a force component applied to the entire valve element in the flow channel direction but is different from a component such as the dynamic torque applied to the valve element.

Also, the valve opening degree detecting means widely includes those which are able to obtain an output of the valve opening degree. Therefore, it is not limited to a means that outputs the valve opening degree, but the means may be a means that detects a rotating angle, moving distance, drive pressure, screw feed ratio (rotation angle), etc., which are compatible to the valve opening degree.

In the present invention, it is preferable that the above-described valve element is constructed to be rotatable around an axis that intersects the above-described flow-channel direction. Where the valve element is constructed to be rotatable around the axis intersecting the flow-channel direction of fluid (in a case of a rotary valve) , although the valve opening degree of the valve element changes in compliance with rotations, the above-described stress detecting means is composed so as to detect a flow-channel-direction force component which is not directly influenced by rotations of the valve element, whereby influences due to the opening and closing operations of the valve element are reduced to increase the detection accuracy, and the detecting means can be simply constructed.

In the present invention, it is preferable that the above-described stress detecting means includes a detector which is able to detect a force, relative displacement or relative strain between the above-described valve element or a member fixed at least in the above-described flow-channel direction with respect to the above-described valve element and a housing which rotatably and axially supports the above-described valve element or a member fixed at least in the flow-channel direction with respect to the corresponding housing. Such a detector can be easily attached by only slightly modifying the conventional valve structure, wherein the structure of the valve is not unnecessarily complicated. In this case, a portion detected by the detector is not only at the valve element but also the valve rod or axial supporting portion which supports the valve element. In particular, it is preferable, in view of a lowering in the influence resulting from opening and closing operations of the valve element, that a detecting portion is established at a portion that does not move along with the opening and closing operations of the valve element and is fixed in the flow-channel direction with respect to the valve element (for example, an axially supporting portion, etc., that does not rotate along with the valve element in a rotary valve and is rotatably coupled with respect to the valve element).

Next, a flow rate measuring device according to the present invention is characterized by comprising: a flow regulating valve which is provided with a valve element operably disposed in a flow channel and is capable of regulating the flow of fluid according to the valve opening degree of the corresponding valve element; a stress detecting means for detecting the above-described flow-channel-direction force component, which is applied to the above-described valve element by the fluid; a valve opening degree detecting means for detecting the valve opening degree of the above-described valve element; and a flow rate calculating means for obtaining a flow rate of the above-described fluid by using the above-described force component detected by the above-described stress detecting means and the above-described valve opening degree detected by the above-described valve opening degree detecting means.

In the present invention, it is preferable that the above-described valve element is rotatably constructed around an axis intersecting the flow-channel direction.

In the invention, it is preferable that the above-described stress detecting means includes a detector which is able to detect a force, relative displacement or relative strain between the above-described valve element or a member fixed at least in the above-described flow-channel direction with respect to the above-described valve element and a housing which rotatably and axially supports the above-described valve element or a member fixed at least in the flow-channel direction with respect to the corresponding housing.

In the invention, it is preferable that the above-described flow rate calculating means includes a differential pressure converting means for obtaining a differential pressure between the upstream side and downstream side of the above-described valve element on the basis of the above-described force component, and a flow rate converting means for obtaining the above-described flow rate on the basis of the above-described differential pressure and valve opening degree.

Next, a flow control device according to the present invention is characterized by comprising: a flow regulating valve which is provided with a valve element operably disposed in a flow channel and is capable of regulating the flow of fluid according to the valve opening degree of the corresponding valve element; a stress detecting means for detecting the above-described flow-channel-direction force component, which is applied to the above-described valve element by the fluid; a valve opening degree detecting means for detecting the valve opening degree of the above-described valve element; a valve element driving means for driving the above-described valve element; a flow rate calculating means for obtaining a flow rate of the above-described fluid by using the above-described force component detected by the above-described stress detecting means and the above-described valve opening degree detected by the above-described valve opening degree detecting means; and a valve opening degree control means for controlling the above-described valve element driving means in response to the above-described flow rate.

In the invention, it is preferable that the valve element is constructed to be rotatable around an axis intersecting the above-described flow-channel direction.

In the invention, it is preferable that the above-described stress detecting means includes a detector which is able to detect a force, relative displacement or relative strain between the above-described valve element or a member fixed at least in the above-described flow-channel direction with respect to the above-described valve element and a housing which rotatably and axially supports the above-described valve element or a member fixed at least in the flow-channel direction with respect to the corresponding housing.

In the invention, it is preferable that the above-described flow rate calculating means includes a differential pressure converting means for obtaining a differential pressure between the upstream side and downstream side of the above-described valve element on the basis of the above-described force component, and a flow rate converting means for obtaining the above-described flow rate on the basis of the above-described differential pressure and valve opening degree.

Also, in the invention, it is preferable that the valve opening degree control means is constructed so as to control the above-described valve element driving means by comparing an integrated flow rate obtained by integrating the above-described flow rate and a desired value thereof with each other.

Next, a flow rate measuring method according to the invention is characterized by comprising the steps of: detecting a valve opening degree with respect to a flow regulating valve that is provided with a valve element operably disposed in a flow channel and is capable of regulating the flow of fluid according to the valve opening degree of the corresponding valve element; detecting the above-described flow-channel-direction force component applied to the above valve element by the fluid; and obtaining the above-described flow rate on the basis of the above-described valve opening degree and the above-described force component.

In the invention, it is preferable that the above-described flow rate calculating means obtains a differential pressure between the upstream side and downstream side on the basis of the above-described force component and obtains the above-described flow rate on the basis of the corresponding differential pressure and the above-described valve opening degree.

Brief Description of the Drawings

Fig. 1 is a general configuration view showing the entire construction of an embodiment of a flow control device according to the invention;

Fig. 2 is a sectional view showing a detailed structure of a flow regulating valve with a part thereof enlarged;

Fig. 3 is a graph showing the relationship between detected stresses f and differential pressures $\Delta P$;

Fig. 4 is a graph showing a relationship (one example) between a valve opening degree $\theta$ and a CV value;

Fig. 5 is a graph showing comparisons of changes in time regarding differential pressures $\Delta P$ and flow rates actually measured by a flow rate meter when the flow rate is constant; and

Fig. 6 is a graph showing comparisons of changes in time regarding differential pressures $\Delta P$ and flow rates actually measured by a flow rate meter when the flow rate fluctuates.

Best Mode for Carrying Out the Invention

Next, a detailed description is given of embodiments of a flow regulating valve, a flow rate measuring device, a flow control device, and a flow rate measuring method according to the invention with reference to the accompanying drawings. The "flow regulating valve" referred to in the present invention is based on a functional concept and resultantly includes all valves having a structure which is capable of regulating the flow rate.

Therefore, the flow regulating valve is not limited to valves which are generally used for the purpose of regulating the flow rate.

Where the present invention is carried out, a flow-channel-direction force component (hereinafter merely called a "stress") of a load applied to a valve element of a flow regulating valve by a fluid is detected. Detection of the stress may be based on a method in which a detector directly detects the stress applied to the valve element, and a method for obtaining a value corresponding to the above-described stress by detecting a relative displacement for example, a displacement against a housing) of the valve element and a relative strain (a strain against the housing) of the valve element, etc. The stress f applied to the valve element in the flow-channel direction by the fluid has a certain correlation (usually, a positive correlation, in particular, a correlation similar to a linear function of which the gradient is positive) with a differential pressure $\Delta P$ between the upstream side and downstream side of the valve element of a flow regulating valve where the valve opening degree $\theta$ is fixed, and the stress f is expressed by:

$$\Delta P = A(f) \qquad (1)$$

The function A can be obtained for every prescribed valve opening degree $\theta$ by measuring the relationship between the stress f and differential pressure $\Delta P$.

On the other hand, in a state where the valve opening degree $\theta$ is fixed as in the above description, a CV value which is an intrinsic value of the flow regulating valve is obtained by measuring the differential pressure $\Delta P$ and flow rate Q. The CV value is also a function of the valve opening degree $\theta$, wherein if $\alpha$ is a constant, and G is a specific gravity of a fluid, the CV value becomes:

$$CV = \alpha \cdot Q \cdot (G/\Delta P)^{1/2} \qquad (2)$$

Therefore, if the above-described differential pressure $\Delta P$ and CV value are obtained, it becomes possible to acquire the flow rate Q. That is, the flow rate Q generally becomes:

$$Q = CV/\{\alpha(G/\Delta P)^{1/2}\}$$

$$= CV/\{\alpha(G/A(f))^{1/2}\} \qquad (3)$$

Generally, since it is considered that the function A and CV value of the above-described equation (3) change in compliance with the valve opening degree $\theta$, if A(f) = B(f,$\theta$) and CV = C($\theta$),

$$Q - C(\theta)/\{\alpha(G/B(f, \theta))^{1/2}\} \qquad (4)$$

is derived.

Therefore, if B(f, $\theta$) and C($\theta$) are determined by experiments, a function D of

$$Q = D (f, \theta) \qquad (5)$$

is determined. That is, it is possible to obtain the flow rate Q by detecting the stress f and valve opening degree $\theta$.

As described above, in the invention, the flow rate Q can be directly obtained on the basis of the stress f and valve opening degree $\theta$ by using the function D. Also, in the invention, the stress f can be converted to the differential pressure $\Delta P$ in response to the valve opening degree $\theta$ by using the above-described function B. In addition, based on the differential pressure $\Delta P$ and valve opening degree $\theta$, the flow rate Q can be obtained by using the above-described equation (4). In the latter case, the differential pressure $\Delta P$ can be converted to the flow rate Q by using the CV value responsive to the valve opening degree $\theta$. Therefore, it becomes possible to apply a calculation process or a converter, which is similar to that of a general differential pressure type flow rate meter, and it becomes possible to compare the differential pressure $\Delta P$ by measuring the pressure at the upstream side of a flow regulating valve and that at the downstream side thereof with the differential pressure obtained by the above-described function B, and to correct the corresponding differential pressure.

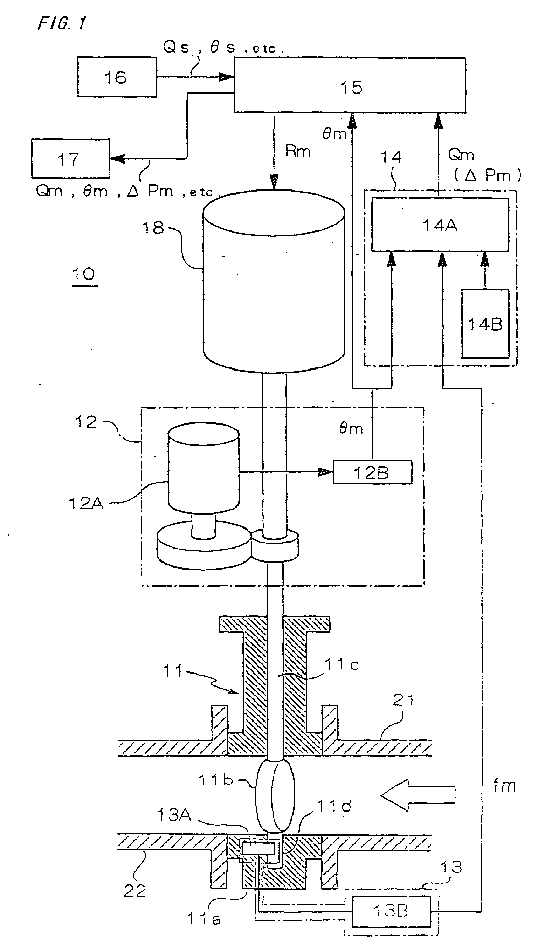

Fig. 1 is a general configuration view showing the entire construction of an embodiment of a flow control device according to the invention. The flow control device 10 has a flow regulating valve 11 which is composed of a butterfly valve, etc. The flow regulating valve 11 is provided with a housing 11a, a valve element (valve disk) 11b disposed in the housing 11a, a valve rod 11c that is connected to the valve element 11b and drives the valve element 11b, and an axially supporting portion (lower part valve rod) 11d for axially supporting the valve element 11b (for example, the lower end thereof) on the housing 11a separately from the valve rod 11c. Herein, the flow regulating valve 11 is connected to pipes 21 and 22 that compose the upstream side portion and downstream side portion of a flow channel.

The above-described flow regulating valve 11 is provided with a valve opening degree detecting means 12 for detecting the valve opening degree of the valve element 11b. The valve opening degree detecting means 12 is provided with a valve opening degree detector 12A for outputting a detected value in response to a rotating angle of the valve rod 11c, which is composed of a rotary encoder, potentiometer, etc., and a valve opening degree converter 12B for outputting a valve opening degree signal θm corresponding to the valve opening degree (for example, a rotating angle of the valve element 11b) upon receiving a detected value of the valve opening degree detector 12A.

In addition, the flow regulating valve 11 is provided with a stress detecting means 13 which is fixed at least in the flow-channel direction shown by the arrow in the drawings with respect to the valve element 11b and detects the stress of a fluid applied to the above-described axial supporting portion 11d. The stress detecting means 13 is provided with a stress detector 13A including a load cell which directly detects a force received from the axial supporting portion 11d, a displacement sensor for detecting the displacement of the axial supporting portion 11d, or a strain gauge for detecting the strain of the axial supporting portion 11d, and a stress converter 13B for outputting a stress signal fm corresponding to the stress in the flow-channel direction, which is applied to the valve element 11b by the fluid, from a detected value of the stress detector 13A. Also, the stress detector 13A for obtaining a signal onto which the flow-channel-direction stress applied from the axial supporting portion 11d is resultantly reflected is not used as it is, but for example, a stress, displacement or strain applied from the detecting portion may be amplified and detected by causing a link mechanism to intervene between the detecting portion such as the axial supporting portion 11d and the stress detector 13A. It is a matter of course that the stress detector 13A may be constructed so as to amplify the output thereof by means of an electric amplifier. In either case, it is necessary that the stress detector 13A is a means for obtaining a force component applied to the valve element 11b in the flow-channel direction (shown by the arrow in the drawing), and it does not include a means for detecting a torque applied to the valve element 11b in the rotating direction and a stress applied in the direction orthogonal to the flow-channel direction.

A valve opening degree signal θm outputted from the above-described valve opening degree detecting means 12 and a stress signal fm outputted from the above-described stress detecting means 13 are inputted into the flow rate calculating means 14. The flow rate calculating means 14 may be constructed so as to include a calculator 14A composed of a computing unit and a computing circuit, etc., such as a CPU (Central Processing Unit), etc., and a memory unit 14B composed of memories such as EEPROM, etc., giving necessary parameters for a flow rate calculation which is carried out in the calculator 14A.

The above-described flow rate calculating means 14 once calculates a differential pressure ΔPm on the basis of the above-descri bedvalve opening degree signal θm and stress signal fm. The calculation process composes the above-described differential pressure converting means. The differential pressure conversion is carried out on the basis of experimental data indicating the relationship among the stress f shown by the stress signal fm, valve opening degree θ shown by the valve opening degree signal θm, and differential pressure ΔP. As a matter of course, a prescribed theoretical expression or data (conversion table, etc.,) based on the theoretical expression may be used instead of the experimental data. Also, the differential pressures ΔP obtained by the flow rate calculating means 14 are calculated from the stress f and valve opening degree θ, which are detected as described above, and it may not be necessarily strictly coincident with the differential pressure obtained from the pressure actually detected at the upstream side and downstream side of the valve element 11b.

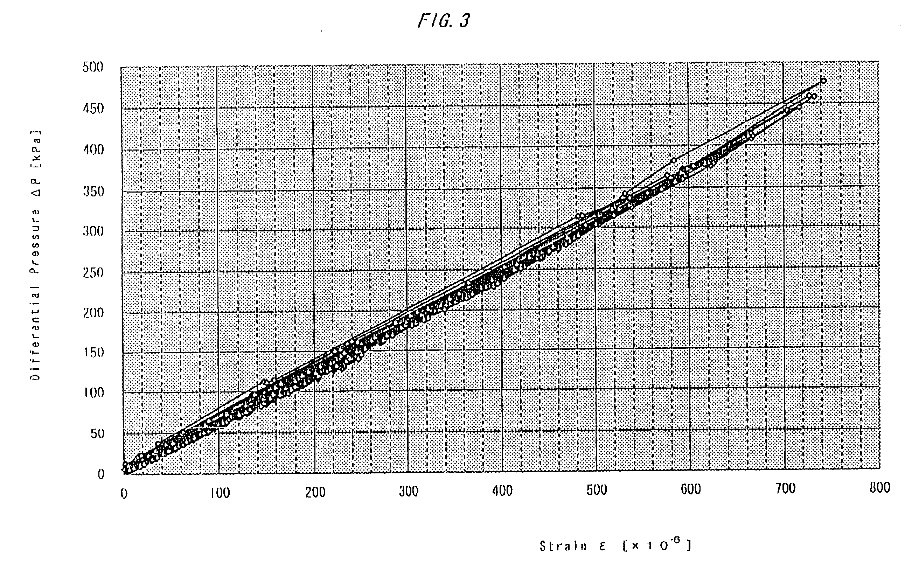

Now, Fig. 3 shows the relationship between a strain ε and differential pressures ΔP when the valve opening degree θ is caused to fluctuate in a range from 6 through 60 degrees with water flown in a flow channel. The graph shown in Fig. 3 indicates the relationship between the strain ε ($\varepsilon = \sigma/E$, wherein σ is a stress and E is Young's Modulus) and the differential pressure ΔP in a case where a strain gauge is used. However, since the strain is proportional to the stress, the relationship between the stress f and the differential pressure ΔP qualitatively becomes identical to the example shown in the drawing. Therefore, a positive correlation can be recognized between the stress f and differential pressure ΔP, and the relationship becomes almost proportionality. In addition, generally, as described above, it is considered that there is a relationship where the differential pressure ΔP = B (f, θ). However, judging from the data, it is understood that the differential pressure ΔP hardly depends on the valve opening degree θ, and is almost determined only by the stress f. In other words, basically, almost all the stress f, that is, a flow-channel-direction force component of a load applied to the valve element by fluid, is produced by the differential pressure ΔP before and after the valve element (between the upstream side and downstream side).

As the valve opening degree θ changes, the shape of an orifice composed of the valve element changes. Therefore, the differential pressure ΔP will change by the valve opening degree θ. However, the correlation pattern (its linearity) hardly changes and fluctuation of the value is actually remarkably slight. Accordingly, in the process of obtaining the above-described differential pressure ΔP, the differential pressure ΔP may be directly obtained by using only the stress f without using the valve opening degree θ as described above. Thus, since the stress f detected in the present embodiment is a value onto which the differential pressure ΔP is almost accurately reflected, it is possible to remarkably increase the sensitivity and accuracy of the flow rate in comparison with a case where values which are produced with var ious types of parameters are complicated and mixed as in the prior art dynamic torque are used. Further, in the butterfly valve illustrated in the drawing, since the correlation between the prior art dynamic torque and the differential pressure ΔP greatly changes by the valve opening degree θ, the sensitivity and accuracy are radically lowered in an area close to a state where a valve is fully opened or fully closed. However, since, in the present embodiment, the relationship between the stress f and differential pressure ΔP does not greatly change by a change in the valve opening degree θ as the dynamic torque, it becomes possible to maintain the sensitivity and accuracy in the entire range of the valve opening degree.

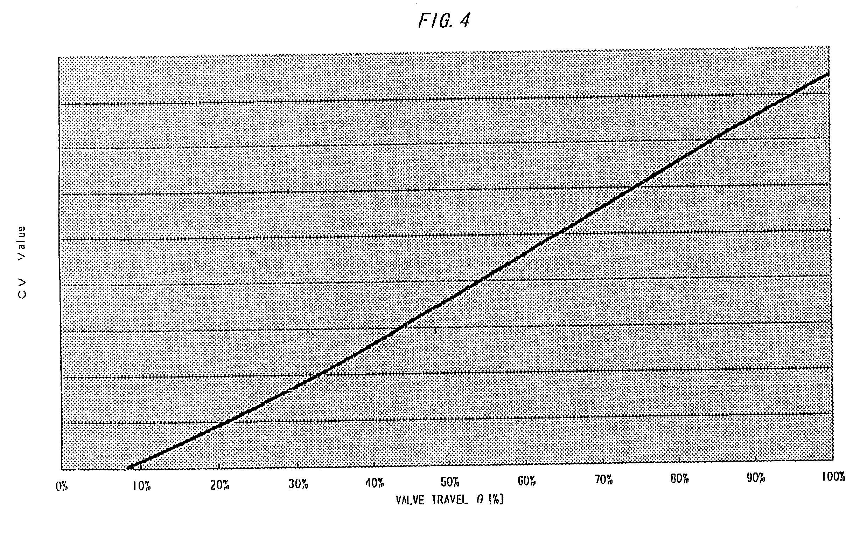

Next, a flow rate is calculated on the basis of the above-described differential pressure ΔPm and valve opening degree signal θm, and the flow rate is outputted as a flow rate signal Qm.The calculation process composes the above-described flow rate converting means. The flow rate conversion is carried out on the basis of experimental data indicating the relationship between the above-described CV value and the valve opening degree θ shown by the valve opening degree signal θm, which is illustrated in Fig. 4. Also, in Fig. 4, where it is assumed that the maximum value of the valve opening degree θ is made into 60 degrees and the maximum value (60 degrees) is 100%, the ratio of the valve opening degree is shown as θ(%). However, there is no limit to the maximum value of the valve opening degree θ in the present invention. Dependency of the CV value on the valve opening degree assumes various patterns on the basis of the valve structure and physical properties of a fluid, etc. Herein, a prescribed theoretical expression and data (conversion table, etc.) based on the theoretical expression may be used instead of the experimental data.

Here, the above-described flow rate calculating means 14 can also be constructed so as to include a differential converter, which composes the above-described differential converting means, and a flow rate converter, which composes the above-described flow rate converting means, as separate physical components.

Also, differing from the above-described construction, the flow rate calculating means 14 may be constructed so as to directly obtain a flow-rate signal Qm from the valve opening degree signal θm and stress signal fm. In this case, based on the experimental data shown in Fig. 3 and Fig. 4 and other theoretical expressions, the above-described function D or data (conversion table, etc. ) based on the above-described function D are utilized.

Also, a process by use of the above-described flow rate calculating means may be constructed in which parameters other than the above-described parameters are taken into consideration. For example, the above-described experimental data, etc., may be obtained by using an actually flowing fluid or may be based on conditions having an identical temperature, etc., as those in the situation of an actual fluid. In addition, correction may be carried out on the basis of the specific gravity, viscosity, temperature characteristics, etc., of a fluid.

The above-described flow rate signal Qm is inputted into the control means 15 composed of an MPU (Micro Processor Unit) or control circuits, etc. The control.means 15 transmits a control signal Rm to the valve element driving means 18 on the basis of the flow rate signal Qm and a flow rate instruction Qs which is internally retained or inputted by the inputting device 16. The valve element driving means 18 is capable of driving and rotating the valve rod 11c. various types of motor (electroactuators) and fluid-pressure actuators, etc., may be used as the valve element driving means 18. Also, the inputting device 16 may be composed of a keyboard, mouse, operation switches, and receiving device for receiving data, etc.

Herein, the control means 15 may be constructed so as to drive the valve element driving means 18 on the basis of a valve opening degree instruction θs received from the inputting device 16. In this case, it is possible to control the valve opening degree on the basis of the above-described valve opening degree instruction θs and valve opening degree signal θm which is received from the valve opening degree detecting means 12. In further detail, it is possible to control by feedback control so that the valve opening degree signal θm is drawn near the above-described valve opening degree instruction θs. It is preferable that this direct control with respect to the valve opening degree is composed so that it is selectively carried out in regard to the above-described flow rate control. That is, it is preferable that a flow rate to be measured can be made the control variable, and the valve opening degree itself can also be the control variable.

In addition, the control means 15 may be composed so that it can output (display) at least any one of the flow rate signal Qm, valve opening degree signal θm and differential pressure ΔPm to (in) the outputting device 17. The outputting device 17 may be composed of a printer, display, a transmitter for transmitting data, peripheral communicating means (connecting means for a network such as Lon Works: Brand name), etc.

The above-described outputting means 15 may be provided with further additional features. For example, it is possible to carry out such control in which an integrated flow rate is obtained by integrating the flow rate signal Qm derived from the flow rate calculating means 14 and the valve opening degree varies (for example, fully closing the valve or fully opening the valve) when the integrated flow rate reaches a prescribed desired value. In addition, it may be constructed that the integrated flow rate is outputted to and displayed in the outputting device 17 without carrying out any control based on the integrated flow rate.

Further, the control means 15 may control so as to raise an alarm or close the valve, judging that a fluid reversely flows when the stress f is smaller than a prescribed default value (for example, a value when the flow rate is 0) or the stress f is detected to be a negative value.

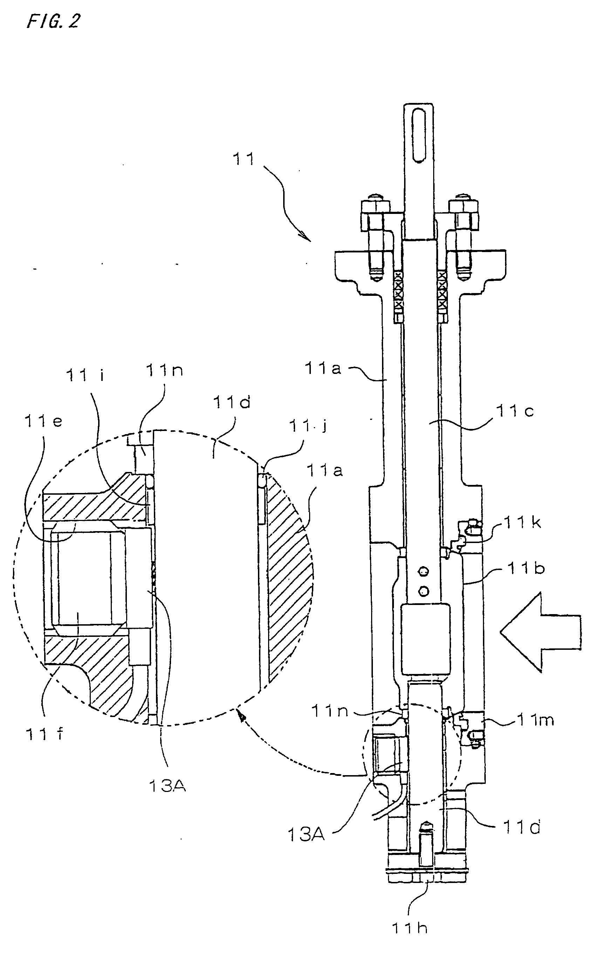

Fig. 2 shows a detailed example of the flow regulating valve 11 of the above-described construction. The flow regulating valve 11 is sealed by a packing, etc., with the valve rod 11c rotatable with respect to the housing 11a. The lower end of the valve rod 11c is fixed with respect to the valve element 11b in a state where the lower end thereof is inserted into the valve element 11b. Also, the valve element 11b is rotatably coupled to the axial supporting portion 11d. The axial supporting portion 11d is fixed with respect to the flow-channel direction shown by the arrow in the drawing in connection with the valve element 11b and valve rod 11c, and at the same time, is fixed with respect to the housing 11a in the rotating direction. Therefore, the valve element 11b and the valve rod 11c at the drive side are constructed so as to be rotatable around the axial line in the illustrated up and down direction with respect to the housing 11a, and the axial supporting portion (lower valve rod) 11d for supporting the valve element 11b is constructed so as not to be rotatable with respect to the housing 11a at the opposite side of the drive side valve rod 11c.

An opening 11e such as a screw hole, etc., which is formed so as to expose the axial supporting portion 11d, is provided at the lower part of the housing 11a, and the stress detector 13A is disposed in the opening 11e, wherein the detecting portion of the stress detector 13A is retained so as to be pressed to a portion to be detected (the axial supporting portion 11d) by fixing members 11f such as a bolt, fixing screw, etc. Pressing contact between the detecting portion of the stress detector 13A and the portion to be detected functions to stabilize a detection value of the stress detector 13A. The detecting portion may be fixed, by means of adhering, etc., at the portion to be detected (the axial supporting portion 11d).

The stress detector 13A is a load cell in the illustrated example. The stress detector 13A is disposed between the axial supporting portion 11d, which is the portion to be detected, and the fixing member 11f fixed at the housing 11a which is the valve body, and is constructed so as to detect a stress operating therebetween. The stress detector 13A, composed of a load cell of the illustrated example, etc., is constructed so that it indirectly detects a flow-channel direction stress applied to the valve element 11b by a fluid via the axial supporting portion 11d being the portion to be detected.

The stress detector 13A is not limited to such a type as directly detects the stress as in the above-described load cell. It may be any type if it can resultantly detect an amount corresponding to the stress applied to the valve element 11b by a fluid in the flow channel direction. For example, the stress detector 13A may be a displacement sensor for detecting a relative displacement of the axial supporting portion 11d regarding the housing. This is because the relative displacement shows a value having a positive correlation with (for example, almost proportional to) the stress in response to the rigidity of the axial supporting portion 11d. Also, the stress detector 13A may be a strain gauge (diaphragm type semiconductor strain gauge, etc.) for detecting a relative strain of the axial supporting portion 11d. This is because the relative strain of the axial supporting portion 11d shows a value having a positive correlation with (for example, almost proportional to) the stress in response to the rigidity of the axial supporting portion 11d.

Although it is preferable that the stress detector 13A is disposed, as in the illustrated example, at the downstream side in the flow-channel direction of the portion to be detected, which is set on a member (that is, the axial supporting portion 11d) fixed in the flow-channel direction with respect to the valve element 11b, to the contrary, it may be disposed at the upstream side of the portion to be detected, in the flow-channel direction. In this case, it is sufficient that the detecting portion of the stress detector 13A is fixed at the portion to be detected, for example, a member (the axial supporting portion 11d) fixed in the flow-channel direction, with respect to the valve element 11b, so that the stress detector 13A can detect a tension force brought about by deformation of the portion to be detected, toward the downstream side with respect to the valve element 11b.

In addition, since the member (that is, the axial supporting portion 11d) fixed in the flow-channel direction with respect to the valve element 11b is fixed with respect to the housing 11a in the rotating direction that is an operating direction of the valve element 11d, it becomes possible to further stabilize the detection of the stress detector 13A. That is, since the portion to be detected is made into a portion that does not rotate along with the valve element 11b but is fixed, it is possible to lower influence on the detection valve due to rotations of the valve element 11b. However, in the invention, the portion to be detected is not limited to the above-described axial supporting portion 11d, but may be a portion facing the valve element 11b itself or the valve rod 11c that rotates together with the valve element 11b.

Also, a fixing means 11h composed of bolts, etc., fixes the axial supporting portion (the lower valve rod) 11d with respect to the housing 11a, whereby induced rotation of the axial supporting portion 11d, which is brought about by rotations of the valve element 11b, can be prevented, and at the same time, the end portion opposite to the valve element 11b of the axial supporting portion 11d is fixed. Therefore, since the corresponding end portion becomes a fulcrum, the detecting state (detection value) of the stress detector 13A can be stabilized.

Also, a seat ring 11k secures seal abili ty in a fully closed state of the valve element 11b, and a seat ring presser 11m holds the seat ring 11k at the housing 11a. Further, a guide ring 11i is a cylindrical member intervening between the axial supporting portion 11d and the housing 11a and prevents the stress detector 13A (load cell) from being damaged due to an excessive load given. a packing (O ring) 11j prevents fluid from invading the portion where the stress detector 13A is disposed.

thrust ring 11n supports the lower part of the valve Element 11b and simultaneously is slidably fitted to the axial supporting portion 11d in the axial direction. Further, the thrust ring 11n is constructed to be movable in the flow-channel direction on the housing 11a. The thrust ring 11n functions to burden a load of the valve element 11b in the vertical direction and to reduce a sliding resistance in the flow-channel direction so that the axial supporting portion 11d becomes smoothlymovable (slidable) in the flow-channel direction.

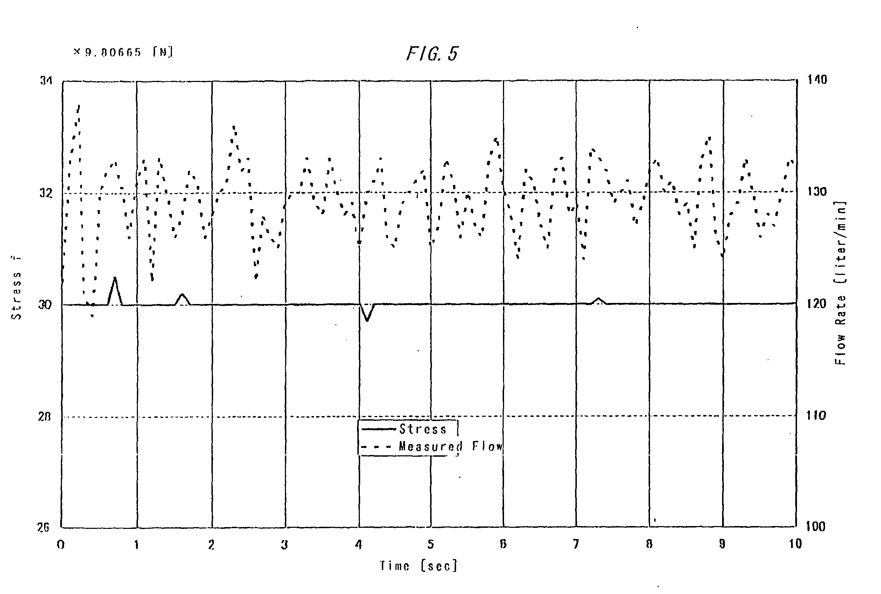

Fig. 5 shows the results of having compared the stress f detected by the stress detecting means 13 with the actually measured flow rate which is metered by a prior art differential pressure flow rate meter, electromagnetic flow rate meter or mass flow meter, etc. (in the illustrated example, an electromagnetic flow rate meter is used), wherein the above-described flow control device 10 is constructed so that the flow rate of a fluid (a liquid such as water or a gas such as air) passing through the flow regulating valve 11 becomes almost constant. Basically, it is understood that in the above-described respective prior art flow rate meters, the flow rate greatly fluctuates vertically in any case as shown by the dotted lines and it is difficult to secure accurate measured values because of overlapped noise, etc., that is, the stability of detection is low. To the contrary, it is understood that the stress f which is obtained by the stress detecting means 13 according to the present embodiment is remarkably stabilized, and the accuracy is further increased over that of the prior arts.

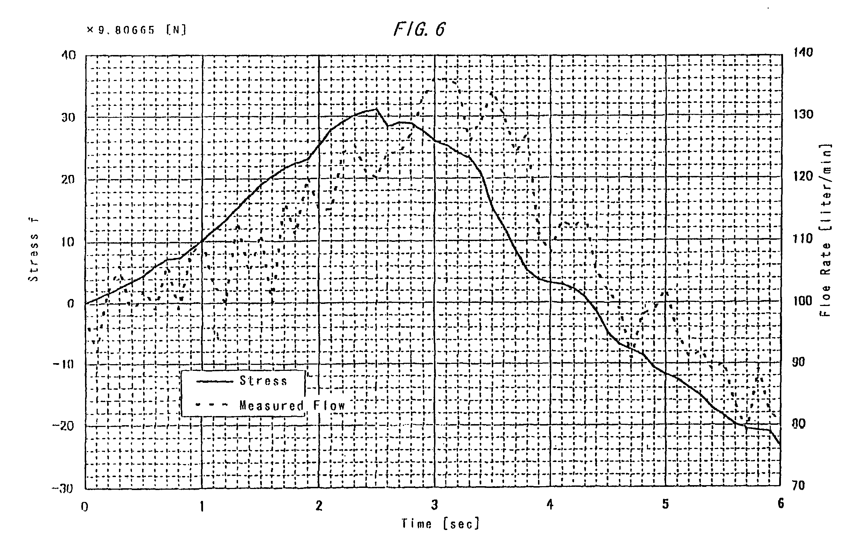

Fig. 6 shows, in the above-described flow control device 10, the comparison of fluctuations in the stress f with the results of measurement using the prior art flow rate meters as shown above when the flow rate of a fluid is changed. Herein, as for the graduation of the stress f, the stress value is made into 0 when the experiment is commenced (Time = 0). In the case of the stress f detected by the present embodiment, a change appears 0.3 seconds or more (0.5 through 1.0 seconds) earlier than in the data of the prior art flow rate meters. Therefore, it is understood that the response speed for detection of flow rate is quicker than in the prior art methods.

As described above, according to the embodiment, the stress applied to the valve element by a fluid in the flow-channel direction is detected, and the flow rate is obtained on the basis of the stress and valve opening degree. Since a stress applied to the valve element by a fluid in the flow-channel direction is reflected on the above-described stress without almost any loss, the above-described stress is different from a dynamic torque applied to the valve element, which is based on a part of the stress applied by a fluid and at the same time radically changes on the basis of the valve opening degree. Accordingly, the sensitivity and accuracy can be further remarkably improved than in the prior art.

In addition, since the flow regulating valve is of such a type in which the valve element rotates around the axial line intersecting the flow-channel direction, in case that a dynamic torque is detected it is necessary that the flow regulating valve is constructed so as not to detect a rotating torque of the valve element, that is, it becomes necessary to detect only the dynamic torque applied by a fluid. However, in the present embodiment, since the above-described stress does not have direct relationship with a rotating torque of the valve element, wherein the present embodiment is advantageous in that only the stress applied by a fluid can be detected using a simple structure with no special function.

The flow regulating valve, flow rate measuring device and flow control device according to the invention are not limited to the above-described examples illustrated. It is as a matter of course that the invention can be carried out with various modifications and variations in scope that do not depart from the spirit of the invention. For example, in the above-described embodiment, a rotary valve (in the illustrated example, a butterfly valve) whose valve element rotates in the direction intersecting the flow-channel direction is used as the flow regulating valve. A ball valve may be used in addition to the butterfly valve as the rotary valve. However, the flow regulating valve according to the invention is not limited to a rotary valve as shown above. The invention may be applicable to various types of valve structures such as, for example, a gate valve, partitioning valve, ball type valve, diaphragm valve, pinch valve, etc., as long as the valve structure includes a valve element for receiving a stress from a fluid in the flow-channel direction.

Also, in the method according to the invention, there is no need for using an operational unit or operational circuits as in the above-described device. Apart or all of the calculation process may be carried out by hand.

Industrial Applicability

According to the invention, it is possible to find a flow rate with higher sensitivity and accuracy. The construction can be made very compact, and a flow rate value which is less influenced by turbulence, etc., can be brought about. Therefore, it is possible to improve the accuracy of flow rate detection and to make fluid equipment compact in the field of handling various types of fluids.

**Claims**

1.  A flow regulating valve having a valve element operably disposed in a flow channel and being capable of regulating the flow of a fluid according to the valve opening degree of the valve element, comprising:

    a stress detecting means for detecting the flow-channel-direction force component of a load applied to the valve element by the fluid; and

a valve opening degree detecting means for detecting the degree of opening of the valve element.

2. The flow regulating valve as set forth in Claim 1, wherein the valve element is constructed to be rotatable around an axis that intersects said flow-channel direction.

3. The flow regulating valve as set forth in Claim 1 or 2, wherein said stress detecting means includes a detector which is able to detect a force, relative displacement or relative strain between said valve element or a member fixed at least in said flow-channel direction with respect to said valve element and a housing which rotatably and axially supports said valve element or a member fixed at least in the flow-channel direction with respect to the corresponding housing.

4. A flow rate measuring device comprising:

a flow regulating valve which is provided with a valve element operably disposed in a flow channel and is capable of regulating the flow of fluid according to the valve opening degree of the corresponding valve element;
a stress detecting means for detecting said flow-channel-direction force component of a load applied to said valve element by the fluid;
a valve opening degree detecting means for detecting the valve opening degree of said valve element; and
a flow rate calculating means for obtaining a flow rate of said fluid by using said force component detected by said stress detecting means and said valve opening degree detected by said valve opening degree detecting means.

5. The flow rate measuring device as set forth in Claim 4, wherein said valve element is rotatably constructed around an axis intersecting the flow-channel direction.

6. The flow rate measuring device as set forth in Claim 4 or 5, wherein said stress detecting means includes a detector which is able to detect a force, relative displacement or relative strain between said valve element or a member fixed at least in said flow-channel direction with respect to said valve element and a housing which rotatably and axially supports said valve element or a member fixed at least in the flow-channel direction with respect to the corresponding housing.

7. The flow rate measuring device as set forth in Claim 4 or 5, wherein said flow rate calculating means includes a differential pressure converting means for obtaining a differential pressure between the upstream side and downstream side of said valve element on the basis of said force component, and a flow rate converting means for obtaining said flow rate on the basis of said differential pressure and valve opening degree.

8. A flow control device comprising:

a flow regulating valve which is provided with a valve element operably disposed in a flow channel and is capable of regulating the flow of fluid according to the valve opening degree of the corresponding valve element;
a stress detecting means for detecting said flow-channel-direction force component of a load applied to said valve element by the fluid;
a valve opening degree dete.cting means for detecting the valve opening degree of said valve element;
a valve element driving means for driving said valve element;
a flow rate calculating means for obtaining a flow rate of said fluid by using said force component detected by said stress detecting means and said valve opening degree detected by said valve opening degree detecting means; and
a valve opening degree control means for controlling said valve element driving means in response to said flow rate.

9. The flow control device as set forth in Claim 8, wherein the valve element is constructed to be rotatable around an axis intersecting said flow-channel direction.

10. The flow control device as set forth in Claim 8 or 9, wherein said stress detecting means includes a detector which is able to detect a force, relative displacement or relative strain between said valve element or a member fixed at least in said flow-channel direction with respect to said valve element and a housing which rotatably and axially supports said valve element or a member fixed at least in the flow-channel direction with respect to the corresponding housing.

11. The flow control device as set forth in Claim 8 or 9, Wherein said flow rate calculating means includes a differential pressure converting means for obtaining a differential pressure between the upstream side and downstream side of said valve element on the basis of said force component, and a flow rate converting means for obtaining said flow rate on the basis of said differential pressure and valve opening degree.

**12.** The flow control device as set forth in Claim 8 or 9, wherein the valve opening degree control means is constructed so as to control said valve element driving means by comparing an integrated flow rate obtained by integrating said flow rate and a desired value thereof with each other.

**13.** A flow rate measuring method comprising the steps of:

detecting a valve opening degree with respect to a flow regulating valve that is provided with a valve element operably disposed in a flow channel and is capable of regulating the flow of fluid according to the valve opening degree of the corresponding valve element; simultaneously detecting said flow-channel-direction force component applied to the above valve element by the fluid; and obtaining said flow rate on the basis of said valve opening degree and said force component.

**14.** The flow rate measuring method as set forth in Claim 13, wherein said flow rate calculating means obtains a differential pressure between the upstream side and downstream side on the basis of said force component and obtains said flow rate on the basis of the corresponding differential pressure and said valve opening degree.

FIG. 1

Qs , θs , etc.

16 → 15

17 ← Qm , θm , ΔPm , etc

Rm

θm

Qm
(ΔPm)

14

14A

14B

10

18

12

12A

θm

12B

11

11c

21

11b

fm

13A

11d

22

11a

13

13B

FIG. 2

FIG. 3

EP 1 473 612 A1

# FIG. 4

CV value

VALVE TRAVEL θ [%]

0%   10%   20%   30%   40%   50%   60%   70%   80%   90%   100%

FIG. 5

FIG. 6

<div align="center">

**INTERNATIONAL SEARCH REPORT**

</div>

| | International application No. |
|---|---|
| | PCT/JP03/01272 |

| A. CLASSIFICATION OF SUBJECT MATTER |
|---|
| Int.Cl⁷ G05D7/06, G01F1/28, 1/40 |
| According to International Patent Classification (IPC) or to both national classification and IPC |

| B. FIELDS SEARCHED |
|---|
| Minimum documentation searched (classification system followed by classification symbols) |
| Int.Cl⁷ G05D7/00-06, G01F1/28, 1/40 |
| Documentation searched other than minimum documentation to the extent that such documents are included in the fields searched |
| Electronic data base consulted during the international search (name of data base and, where practicable, search terms used) |

C. DOCUMENTS CONSIDERED TO BE RELEVANT

| Category* | Citation of document, with indication, where appropriate, of the relevant passages | Relevant to claim No. |
|---|---|---|
| A | JP 04-102908 A (NEC Corp.),<br>03 April, 1992 (03.04.92),<br>(Family: none) | 1-14 |
| A | JP 10-320057 A (Calsonic Corp.),<br>04 December, 1998 (04.12.98),<br>(Family: none) | 1-14 |

☐ Further documents are listed in the continuation of Box C.    ☐ See patent family annex.

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 May, 2003 (09.05.03) | 20 May, 2003 (20.05.03) |

| Name and mailing address of the ISA/ | Authorized officer |
|---|---|
| Japanese Patent Office | |
| Facsimile No. | Telephone No. |

Form PCT/ISA/210 (second sheet) (July 1998)